# EUROPÄISCHE PATENTSCHRIFT

(11) **EP 3 864 377 B1**
(45) Veröffentlichungstag und Bekanntmachung des Hinweises auf die Patenterteilung: **10.05.2023**
(21) Anmeldenummer: 19772654.0
(22) Anmeldetag: 09.09.2019
(51) Int. Cl.: G01D 5/20, G01D 11/24, G01D 5/22, G01B 7/00

(54) **WEGSENSOR MIT RÜCKSCHLUSSKERN IN EINER GEHÄUSEKAVITÄT**
DISPLACEMENT SENSOR HAVING A RETURN CORE IN A HOUSING CAVITY
CAPTEUR DE DÉPLACEMENT COMPRENANT UN NOYAU CULASSE DANS UNE CAVITÉ DE BOÎTIER

(30) Priorität: 12.10.2018 DE 102018217517
(43) Veröffentlichungstag der Anmeldung: 18.08.2021
(73) Patentinhaber: Continental Automotive Technologies GmbH, 30165 Hannover (DE)
(72) Erfinder: GRUNWALD, Frank, 60488 Frankfurt am Main (DE)
(74) Vertreter: Continental Corporation
(86) Internationale Anmeldenummer: PCT/EP2019/073960
(87) Internationale Veröffentlichungsnummer: WO 2020/074194

(56) Entgegenhaltungen:
- DE-A1-102012 224 075
- DE-A1-102012 224 101
- DE-A1-102014 206 956
- US-A1- 2017 241 810

## Beschreibung

Die Erfindung betrifft einen Wegsensor zum Erfassen eines Weges bzw. ein Verfahren zu dessen Herstellung.

Aus der DE 101 30 572 A1 ist ein induktiver Messaufnehmer für einen Wegsensor bekannt, der basierend auf einem Magnetfeld eines Geberelementes, das von der Position des Geberelementes abhängig ist, ein elektrisches Signal an eine Auswerteschaltung ausgibt.

Aus der DE 10 2021 224 075 A1 ist ein Positionssensor bekannt, bei dem eine Empfängervorrichtung einen funktionskern aufweist, der von einer Empfängerspule umgeben ist. Des Weiteren ist eine Abschirmung vorgesehen, um den Funktionskern vor einem externen magnetischen Feld abzuschirmen.

Weitere gattungsgemäße Positionssensoren sind in der DE 10 2012 224 101 A1, der US 2017/241 810 A1 und der DE 10 2014 206 956 A1 gezeigt.

Die Anforderungen bezüglich der Robustheit von Sensoren gegenüber externen Magnetfeldern sind in der jüngsten Vergangenheit deutlich gestiegen. Zusätzlich gilt es jedoch auch dem zunehmenden Kostendruck zu begegnen.

Es ist daher Aufgabe der Erfindung, den bekannten Wegsensor zu verbessern bzw. einen kostengünstigen bzw. robusten Wegsensor bereitzustellen.

Die Aufgabe wird durch die Merkmale des unabhängigen Anspruchs bzw. des nebengeordneten Anspruchs gelöst. Vorteilhafte Ausgestaltungen der Erfindung sind Gegenstand der abhängigen Ansprüche. Der Wortlaut der Ansprüche wird durch ausdrückliche Bezugnahme zum Inhalt der Beschreibung gemacht.

Gemäß einem Aspekt der Erfindung umfasst ein Wegsensor zum Erfassen eines Weges:
- eine Erregerspule zum Erregen eines elektromagnetischen Wechselfeldes,
- eine Empfängervorrichtung zum induktiven Empfangen des elektromagnetischen Wechselfeldes und zum Ausgeben eines vom empfangenen elektromagnetischen Wechselfeld abhängigen Ausgangssignals, wobei die Empfängervorrichtung einen Funktionskern aufweist, der von wenigstens einer Empfangsspule umgeben ist. Der Wegsensor weist außerdem einen Rückschlusskern auf, wobei der Rückschlusskern dazu ausgebildet ist, den Funktionskern vor einem externen elektromagnetischen Feld abzuschirmen. Externe magnetische Felder werden durch den Rückschlusskern zu einem großen Teil am Funktionskern vorbeigeleitet und verursachen deshalb nur geringe Störungen in den Sensorsignalen. Die Empfängervorrichtung weist erfindungsgemäß ein Gehäuse mit einer Kavität auf, in der der Rückschlusskern angeordnet ist. Die Kavität mit dem Rückschlusskern kann mit einem Deckel verschlossen sein. Das von der Empfängervorrichtung empfangene elektromagnetische Wechselfeld wird vorzugsweise durch einen Geber, insbesondere einen leitfähigen und / oder magnetischen Geber, abhängig von dessen Position beeinflusst, so dass der zurückgelegte Weg dieses Gebers erfasst werden kann. Das Ausgangssignal enthält dann vorzugsweise eine Information über den zurückgelegten Weg.

Im Rahmen der Erfindung wurde erkannt, dass die naheliegende Vorgehensweise, bei der die beiden Kerne genau gleich ausgestaltet werden und damit kostengünstig mit einem einzigen, gleichbleibenden Herstellungsverfahren herstellbar sind, zu gewissen Nachteilen führt, denn zumindest der Rückschlusskern wird dabei aufwändiger hergestellt, als es für seine Funktion nötig wäre. Durch die Kavität in dem Gehäuse kann der Rückschlusskern in dieser angeordnet werden, wobei sich das Material bzw. der Aufbau des Rückschlusskerns von dem des Funktionskerns unterscheiden können. Auf den Rückschlusskern wirkt somit bei der Herstellung wie auch im Betrieb des Wegsensors kein wesentlicher mechanischer Druck ein, dennoch ist er durch die Kavität sicher und ortsfest gelagert. Daher ermöglich die Erfindung einen kostengünstigeren bzw. robusteren Wegsensor.

Der Rückschlusskern enthält eine kristalline Legierung oder besteht daraus. Während es nur wenige magnetostriktionsfreie, magnetische Legierungen gibt, ist die Anzahl der kristallinen Werkstoffe sehr groß. Dies ermöglicht es, einen kostengünstigen Rückschlusskern einzusetzen. Die Kostenersparnis kann dabei mehr als 60 % gegenüber einem amorphen Kern betragen. Da vorzugsweise die Permeabilität des eingesetzten amorphen Funktionskerns relativ gering ist, bietet der Einsatz eines hochpermeablen, kristallinen Rückschlusskerns Vorteile bei der Abschirmung externer magnetischer Felder, insbesondere bei niedrigen Frequenzen.

Es ist bevorzugt, dass in der Kavität oder an einem Deckel der Kavität zumindest ein Halteelement zum Halten des Rückschlusskerns angeordnet ist, an dem der Rückschlusskern mit Abstand von einer oder mehreren Wandungen der Kavität befestigt, insbesondere festgeklebt, ist. Dies dient einer Vermeidung von Verspannungen auf Grund unterschiedlicher Wärmeausdehnungskoeffizienten. Hierzu wird der Rückschlusskern so befestigt, dass er sich frei in eine oder alle Richtungen ausdehnen kann, ohne auf eine Wandung der Kavität zu treffen. Das Halteelement ist bevorzugt als Steg bzw. Rippe ausgebildet. Es steht in diesem Fall mit dem Rückschlusskern an einem Punkt oder entlang einer Linie in Kontakt bzw. ist mit diesem entsprechend verklebt. Die Kavität kann mehrere Halteelemente aufweisen, wobei nur wenigstens eines, also nicht zwingend alle Halteelemente fest bzw. starr an dem Rückschlusskern befestigt sind. Eines oder mehrere Halteelemente können entsprechend als Niederhalter ausgebildet sein, also lediglich die Bewegung des Rückschlusskerns einschränken, um beispielsweise Biegeschwingungen zu verhindern.

Vorzugsweise wird das Gehäuse von einer Spritzmasse gebildet, die an dem Funktionskern anliegt und diesen umhüllt. Somit werden für die Lagerung der beiden Kerne unterschiedliche Methoden verwendet, die jeweils den unterschiedlichen Anforderungen an die Kerne gerecht werden bzw. eine unterschiedliche Ausbildung der Kerne erlauben. Die Spritzmasse kann im Rahmen eines Spritzpressvorgangs in die entsprechende Gehäuseform gebracht werden, inklusive der Kavität für den Rückschlusskern. Sie kann außerdem teilweise einen Leadframe mit Kontaktbeinchen mit einschließen, der die Empfängervorrichtung mechanisch abstützt und eine elektrische Kontaktierung des Wegsensors vereinfacht.

Es ist bevorzugt, dass die Spritzmasse ein Duroplast-Material umfasst.

Nach einer bevorzugten Ausführungsform umfasst der Funktionskern eine amorphe, insbesondere im Wesentlichen magnetostriktionsfreie, Legierung. Dies ist zwar nicht so kostengünstig wie ein kristalliner Kern, jedoch ermöglicht es, den Funktionskern mechanischen Spannungen auszusetzen, wie sie beispielsweise beim Umspritzen des Funktionskerns mit der Spritzmasse des Gehäuses auftreten. Der Funktionskern kann insbesondere aus mehreren Folien des amorphen Materials aufgebaut sein.

Es ist bevorzugt, dass der Wegsensor ausgebildet ist, anhand einer induktiven Kopplung zwischen Erregerspule und Empfängervorrichtung den zurückgelegten Weg eines Gebers zu erfassen, wobei der Geber die induktive Kopplung wegabhängig durch lokale magnetische Sättigung des Funktionskerns, beeinflusst.

Bevorzugt weist der Wegsensor einen Schaltkreis auf einem Verdrahtungsträger zum Empfangen des Ausgangssignals aus der Empfängervorrichtung auf.

Gemäß einem weiteren Aspekt der Erfindung umfasst ein Verfahren zum Herstellen eines Wegsensors:
- Bereitstellen des Funktionskerns und des Rückschlusskerns,
- Umhüllen des Funktionskerns mit dem Gehäuse,
- Umwickeln des den Funktionskern enthaltenden Teils des Gehäuses mit der Erregerspule und der Empfangsspule,
- Einbringen der Kavität in das Gehäuse außerhalb des mit der Erregerspule und der Empfangsspule umwickelten Teils des Gehäuses,
- Einlegen des Rückschlusskerns in die Kavität des Gehäuses.

Es ist bevorzugt, dass das Gehäuse mittels Spritzgießen oder Spritzpressen gebildet wird, wobei, die Kavität mittels eines Formwerkzeugs in das Gehäuse eingebracht wird.

Bevorzugt beinhaltet die Bildung des Gehäuses das wenigstens teilweise Umspritzen des Funktionskerns mit einer Schutzmasse.

Bevorzugt beinhaltet das Verfahren auch das Verbinden der Empfangsspule mit elektrischen Anschlüssen zur Ausgabe des Ausgangssignals.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden. Dabei zeigen:
- Fig. 1: ein stark schematisiertes Wirkprinzip des Wegsensors
- Fig. 2: ein stark schematisiertes Ausführungsbeispiel eines Wegsensors gemäß Fig. 1,
- Fig. 3: ein stark schematisiertes weiteres Ausführungsbeispiel eines Wegsensors gemäß Fig. 1,
- Fig. 4: einen ersten Produktionsschritt eines Wegsensors,
- Fig. 5: einen zweiten Produktionsschritt eines Wegsensors,
- Fig. 6: eine stark vereinfachte, geschnittene Detailansicht der Kavität gemäß eines Ausführungsbeispiels,
- Fig. 7: eine stark vereinfachte, geschnittene Detailansicht der Kavität gemäß eines weiteren Ausführungsbeispiels.

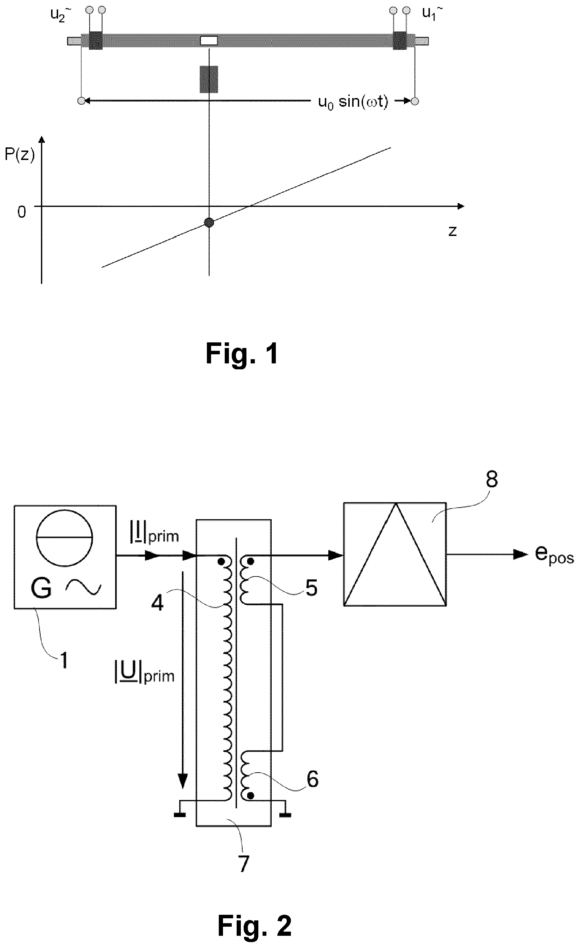

Es wird auf die Figuren 1 - 3 Bezug genommen, die einen Wegsensor beispielhaft in Form eines Differenztransformator-Wegsensors darstellen. Dieser leitet die zu ermittelnde Messgröße, die Position eines Gebers G, aus der Differenz zweier durch eine Erregerspule 4 sekundärseitig induzierter Signale ab. Erregerspule 4 und Empfangsspulen 5 und 6 bilden also gemeinsam einen Übertrager 7. Wird ein Dauermagnet als Geber G verwendet, so sorgt dessen Magnetfeld für eine Sättigungszone im weichmagnetischen Kernmaterial K des Funktionskerns 76, die ihrerseits die sekundärseitig induzierten Spannungen positionsproportional gewichtet. Im regulären Betrieb verändert also der verwendete Dauermagnet als Positionsgeber G in Abhängigkeit seiner Position über dem weichmagnetischen Funktionskern 76 die Amplitude der in die Empfangsspulen 5, 6 induzierten Spannungen. Der Begriff der Empfangsspule wird in dieser Beschreibung als gleichbedeutend mit dem Begriff Induktivität verwendet, kann also beispielsweise auch eine Planarinduktivität bezeichnen. Befindet sich der Dauermagnet in der mechanischen Mitte des Transformators, also mit gleichem Abstand zu den beiden Empfangsspulen 5, 6, so sind, nach Betrag und Phase, beide Sekundärspannungen gleich groß und die Differenz ergibt sich zu Null.

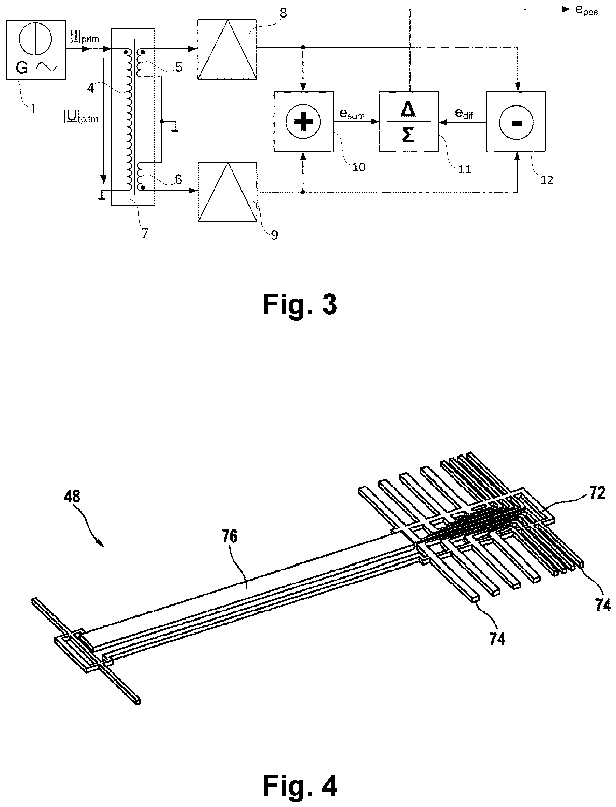

Die beiden in Fig. 2 und Fig. 3 dargestellten Sensortypen entsprechen weiteren Ausführungsbeispielen nach dem Prinzip des in Fig. 1 dargestellten Wegsensors.

Der in Fig. 2 dargestellte Wegsensor nach Typ I zeichnet sich durch seine einfache Bauweise und unter anderem dadurch aus, dass dieser Wegsensor die Position mit Hilfe von subtraktiv verschalteten Empfangsspulen ermittelt. Durch die antiserielle Verschaltung der Empfangsspulen 5, 6 unter Berücksichtigung des Wickelsinns der jeweiligen Empfangsspule 5, 6 wird eine Subtraktion der induzierten Wechselgröße vorgenommen, wobei die Positionsinformation über den gesamten Messbereich nur fehlerfrei ermittelt werden kann, wenn Betrag und Phase der induzierten Signale in den Empfangsspulen 5, 6, also der Sekundärsignale, berücksichtigt werden. Die subtraktiv entstandene Wechselspannungsamplitude wird mit einem Amplitudendemodulator 8 gleichgerichtet, der als phasenempfindlicher Gleichrichter ausgeführt auch die Phasenkomponente berücksichtigt. Als Bezugsphasenlage wird in der Regel das Ansteuersignal der Erregerspule 1 herangezogen.

Positionsabhängige Phasenfehler des Übertragers 7 in Relation zur Bezugsphasenlage der Ansteuerung der Erregerspule 1 haben beim Typ I-Sensor unmittelbar Einfluss auf die Genauigkeit der entstehenden Positionsinformation, die als Sensorausgangssignal epos am Ausgang des Demodulators 8 entsteht.

Für eine hinreichend linear verlaufende Positionskennlinie sollte beim Typ I-Sensor die erregerspulenseitige, d. h. primärseitig ansteuernde Quelle als Stromquelle konstanter Amplitude ausgeführt sein. Dies ist als nachteilig zu bewerten, denn im Vergleich zu einem Generator mit konstanter Spannungsamplitude ist der Schaltungsaufwand für eine Konstant-Wechselstromquelle in der Regel höher anzusetzen. Nachteilig ist weiterhin die direkte Abhängigkeit der Positionsgröße von der absoluten Amplitude des primärseitig ansteuernden Stroms. Um Ungenauigkeiten im Positionssignal zu vermeiden, ist eine bzgl. der Stromamplitude hochstabile Primärquelle erforderlich. Eine Kompensation durch ratiometrische Arbeitsweise existiert beim Typ I-Sensor diesbezüglich nicht. Da es der Typ I-Sensor aufgrund seines einfachen Aufbaus kaum ermöglicht, im Messprozess entstehende systematische Fehler zu kompensieren, sollte er nur für einfachere Anwendungen mit niedrigen Anforderungen eingesetzt werden.

Wegsensoren vom Typ II, wie in Fig. 3 dargestellt, unterscheiden sich in erster Linie von dem vorgenannten Typ I-Sensor in der Art und Weise der Auswertung der Sekundärsignale. Es werden zwei Amplitudendemodulatoren 8, 9 eingesetzt, die selektiv für jede Empfangsspule 5, 6 den Betrag der in die Empfangsspule 5, 6 induzierten Wechselspannung bilden. Die Phaseninformation kann entfallen. Die Weiterverarbeitung der erhaltenen Beträge der Sekundäramplituden zur Positionsinformation geschieht durch Anwendung der arithmetischen Operationen einer Differenzbildung 12 und einer Summenbildung 10. Mit der Bildung des Quotienten 11 aus Differenzsignal edif und Summensignal esum der Beträge erhält man schließlich das Positionssignal epos. Vielfach erfolgt die Signalverarbeitung ab den Eingängen der Amplitudendemodulatoren 8, 9 rein digital. Hierdurch sind Typ II-Wegsensoren besonders driftarm bei Änderungen der Umgebungstemperatur und zudem besonders langzeitstabil. Der erhöhte Aufwand beim Typ II-Sensor beinhaltet noch weitere Vorteile:

Als Ansteuersignalquelle 1 der Erregerspule kann ohne Nachteile ein einfach zu gestaltender Wechselspannungsgenerator mit vorzugsweise konstanter Amplitude eingesetzt werden. Dies ist möglich, weil mit der Quotientenbildung 11 eine Normierung auf die Summenamplitude für jeden einzelnen Messpunkt auf der Positionsachse vorgenommen wird. Dadurch erhält man die Vorteile, dass die Primäramplitude keinen Einfluss mehr auf den erhaltenen Positionswert epos ausüben kann. Zudem trägt das angewendete Normierverfahren trotz verwendeter Primärspannungsquelle zu einer deutlichen Kennlinien-Linearisierung bei. Mit den Größen esum und edif stehen, neben der Positionsinformation, ohne dass Zusatzkosten entstanden sind, weitere Größen zur Verfügung, die für Zwecke der Fehlerdiagnose herangezogen werden können. Sensoren vom Typ II eignen sich aufgrund der Unabhängigkeit von der absoluten Primäramplitude, sowie den nicht ausgewerteten Phaseninformationen, die dadurch auch keinen Fehlerbeitrag leisten können, für Anwendungen mit erhöhten Anforderungen.

Zur Herstellung des Wegsensors wird kann für den ersten Produktionszustand ein Leadframe 72 mit Kontaktbeinchen 74 ausgestanzt werden, der den Differentialtransformator auf dem oben genannten Verdrahtungsträger 42 mechanisch abstützen und ihn mit dem Schaltkreis 38 auf dem Verdrahtungsträger 42 elektrisch kontaktiert. Von den Kontaktbeinchen 74 sind in Fig. 4 der Übersichtlichkeit halber nur einige mit einem Bezugszeichen versehen.

Anschließend wird in dem Leadframe 72 ein Funktionskern 76, der später zur Übertragung eines magnetischen Feldes zwischen Erreger- und Empfangsspulen 4, 5, 6 vorgesehen ist, angeordnet.

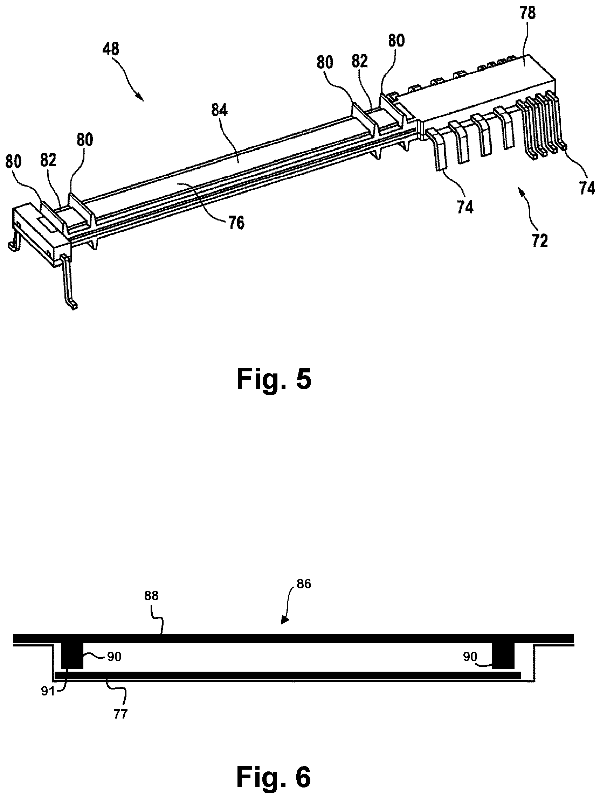

Es wird auf Fig. 5 Bezug genommen, die den Differentialtransformator 48 im Wegsensor aus Fig. 4 in einem zweiten Produktionszustand zeigt.

Zur Herstellung des in Fig. 5 gezeigten zweiten Produktionszustandes wird der Leadframe 72 mit dem magnetischen Funktionskern 76 mit einer Schutzmasse 78 umhüllt. Diese Schutzmasse 78 besteht in der vorliegenden Ausführung aus Duroplast, das idealerweise einen im Wesentlichen gleichen Ausdehnungskoeffizienten wie der magnetische Funktionskern 76 aufweist. Im Falle von Temperaturschwankungen werden so kaum mechanische Spannungen in den magnetischen Funktionskern 76 eingetragen.

Die Schutzmasse 78 wird dabei mit vier Trennelementen 80 ausgebildet, dass sie den magnetischen Funktionskern 76 in zwei äußere Wickelbereiche 82 und einen inneren Wickelbereich 84 unterteilen. Dabei sind die äußeren Wickelbereiche 82 kürzer ausgebildet, als der innere Wickelbereich 84.

Anschließend, wenn die Schutzmasse 78 beispielsweise ausgehärtet ist, können die Kontaktbeinchen 74 dann wie in Fig. 5 gezeigt in Richtung einer Unterseite des Differentialtransformators 48 gebogen werden.

Um nicht nur den Funktionskern 76, sondern auch den Rückschlusskern 77 im Wegsensor anordnen zu können, wird beim Spritzpressvorgang eine Ausnehmung bzw. Kavität 86 geformt, in die der Rückschlusskern dann eingelegt wird. Die Kavität 86 wird anschließend mit einem Deckel 88 verschlossen, beispielsweise festgeklebt oder verschraubt. Der Rückschlusskern 77 besteht aus einem kostengünstigen kristallinen Werkstoff, da er in der Kavität nicht dem Spritzdruck ausgeliefert ist, wie der Funktionskern 76.

Zur Fertigstellung des Differentialtransformators 48 werden in die Wickelbereiche 82, 84 auf den Differentialtransformator nicht weiter dargestellte Spulendrähte aufgewickelt. Eine Erregerspule wird dabei über alle Wickelbereiche 82, 84 hinweg aufgewickelt, während in je einen der äußeren Wickelbereiche 82 eine Empfangsspule, jeweils zueinander baugleich, aufgewickelt wird.

In Fig. 6 ist die Kavität 86 in dem aus der Schutzmasse 78 gebildeten Gehäuse als Schnittansicht dargestellt. Dabei ist der Deckel 88, mit dem die Kavität 86 verschlossen ist, mit zwei Halteelementen 90 ausgestattet. Am Ende des einen Halteelements 90 befindet sich eine Klebestelle 91, an der der Rückschlusskern 77 an einem Ende festgeklebt ist. Das andere Ende des Rückschlusskerns wird durch das andere Halteelement 90 in Position gehalten. Die Kavität 86 ist so dimensioniert, dass an beiden Enden des Rückschlusskerns 77 genug Abstand zu den Wänden der Kavität verbleibt, dass der Rückschlusskern 77 sich thermisch ausdehnen kann. Außerdem ist der Rückschlusskern 77 auch über seine Längsausdehnung hinweg von der Kavität 86 beabstandet.

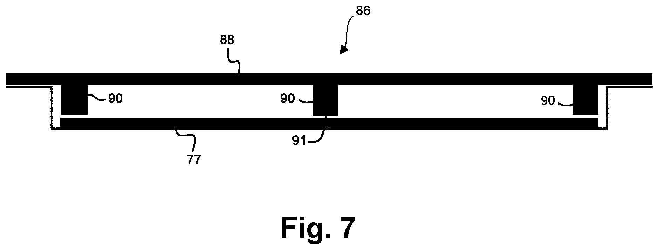

Eine weitere Möglichkeit ist in Fig. 7 dargestellt. Bei diesem Ausführungsbeispiel ist ein Halteelement 90 mittig angeordnet und stellt die Klebestelle 91 bereit, an der der Rückschlusskern 77 befestigt ist. Die Hebelarme bis zu den Enden des Rückschlusskerns 77 sind dabei kürzer als beim Ausführungsbeispiel der Fig. 6. An den Enden wird eine Bewegung des Rückschlusskerns 77 durch weitere Halteelemente 90 eingeschränkt, die allerdings keine Klebestellen 91 aufweisen.

## Patentansprüche

1. Wegsensor zum Erfassen eines Weges, umfassend:
- eine Erregerspule (4) zum Erregen eines elektromagnetischen Wechselfeldes,
- eine Empfängervorrichtung zum induktiven Empfangen des elektromagnetischen Wechselfeldes und zum Ausgeben eines vom empfangenen elektromagnetischen Wechselfeld abhängigen Ausgangssignals, wobei die Empfängervorrichtung einen Funktionskern (76) aufweist, der von wenigstens einer Empfangsspule (5) umgeben ist, und
- einen Rückschlusskern (77), wobei der Rückschlusskern (77) dazu ausgebildet ist, den Funktionskern (76) vor einem externen elektromagnetischen Feld abzuschirmen und wobei die Empfängervorrichtung ein Gehäuse mit einer Kavität (86) aufweist, in der der Rückschlusskern (77) angeordnet ist, **dadurch gekennzeichnet, dass** der Rückschlusskern (77) eine kristalline Legierung enthält oder daraus besteht.

2. Wegsensor gemäß Anspruch 1, **dadurch gekennzeichnet, dass** in der Kavität (86) oder an einem Deckel (88) der Kavität (86) zumindest ein Halteelement (90) zum Halten des Rückschlusskerns (77) angeordnet ist, an dem der Rückschlusskern (77) mit Abstand von einer oder mehreren Wandungen der Kavität (86) befestigt, insbesondere festgeklebt, ist.

3. Wegsensor gemäß einem der vorhergehenden Ansprüche, **dadurch gekennzeichnet, dass** das Gehäuse von einer Spritzmasse (64) gebildet wird, die an dem Funktionskern (76) anliegt und diesen umhüllt.

4. Wegsensor gemäß Anspruch 3, **dadurch gekennzeichnet, dass** die Spritzmasse (64) ein Duroplast-Material umfasst.

5. Wegsensor gemäß einem der Ansprüche 3 oder 4, **dadurch gekennzeichnet, dass** der Funktionskern (76) eine amorphe, insbesondere im Wesentlichen magnetostriktionsfreie, Legierung umfasst.

6. Wegsensor nach einem der vorhergehenden Ansprüche, **dadurch gekennzeichnet, dass** der Wegsensor ausgebildet ist, anhand einer induktiven Kopplung zwischen Erregerspule (4) und Empfängervorrichtung den zurückgelegten Weg eines Gebers (G) zu erfassen, wobei der Geber (G) die induktive Kopplung wegabhängig durch lokale magnetische Sättigung des Funktionskerns (76), beeinflusst.

7. Wegsensor nach einem der vorhergehenden Ansprüche, **gekennzeichnet durch** einen Schaltkreis auf einem Verdrahtungsträger zum Empfangen des Ausgangssignals aus der Empfängervorrichtung.

8. Verfahren zum Herstellen eines Wegsensors nach einem der vorstehenden Ansprüche umfassend:
- Bereitstellen des Funktionskerns (76) und des Rückschlusskerns (77),
- Umhüllen des Funktionskerns (76) mit dem Gehäuse,
- Umwickeln des den Funktionskern (76) enthaltenden Teils des Gehäuses mit der Erregerspule (4) und der Empfangsspule (5),
- Einbringen der Kavität (86) in das Gehäuse außerhalb des mit der Erregerspule und der Empfangsspule umwickelten Teils des Gehäuses,
- Einlegen des Rückschlusskerns (77) in die Kavität (86) des Gehäuses.

9. Verfahren gemäß Anspruch 9, **dadurch gekennzeichnet, dass** das Gehäuse mittels Spritzgießen oder Spritzpressen gebildet wird, wobei, die Kavität (86) mittels eines Formwerkzeugs in das Gehäuse eingebracht wird.

10. Verfahren gemäß einem der Ansprüche 8 oder 9, **gekennzeichnet durch** Umspritzen des Funktionskerns (76) wenigstens teilweise mit einer Schutzmasse (64) zur Bildung des Gehäuses.

11. Verfahren gemäß einem der Ansprüche 8 bis 10, **gekennzeichnet durch** Verbinden der Empfangsspule (5) mit elektrischen Anschlüssen (74) zur Ausgabe des Ausgangssignals.

## Claims

1. Displacement sensor for sensing a distance, comprising:
- an excitation coil (4) for exciting an electromagnetic alternating field,
- a receiver device for inductively receiving the electromagnetic alternating field and for outputting an output signal which is dependent on the received electromagnetic alternating field, wherein the receiver device has a functional core (76) which is surrounded by at least one receiving coil (5), and
- a return core (77),
wherein the return core (77) is designed to shield the functional core (76) from an external electromagnetic field, and wherein the receiver device has a housing with a cavity (86) in which the return core (77) is arranged, **characterized in that** the return core (77) contains or is composed of a crystalline alloy.

2. Displacement sensor according to Claim 1, **characterized in that** at least one holding element (90) for holding the return core (77) is arranged in the cavity (86) or on a cover (88) of the cavity (86), the return core (77) being fastened, in particular glued, to said holding element at a distance from one or more walls of the cavity (86).

3. Displacement sensor according to either of the preceding claims, **characterized in that** the housing is formed by an injection moulding compound (64) which lies against the functional core (76) and envelops the latter.

4. Displacement sensor according to Claim 3, **characterized in that** the injection moulding compound (64) comprises a thermosetting material.

5. Displacement sensor according to either of Claims 3 and 4, **characterized in that** the functional core (76) comprises an amorphous, in particular substantially magnetostriction-free, alloy.

6. Displacement sensor according to one of the preceding claims, **characterized in that** the displacement sensor is designed to use an inductive coupling between the excitation coil (4) and the receiver device to sense the distance covered by an encoder (G), wherein the encoder (G) influences the inductive coupling depending on the distance by local magnetic saturation of the functional core (76).

7. Displacement sensor according to one of the preceding claims, **characterized by** a circuit on a wiring carrier for receiving the output signal from the receiver device.

8. Method for producing a displacement sensor according to one of the preceding claims, comprising:
- providing the functional core (76) and the return core (77),
- enveloping the functional core (76) with the housing,
- winding the excitation coil (4) and the receiving coil (5) around that part of the housing which contains the functional core (76),
- introducing the cavity (86) into the housing outside that part of the housing around which the excitation coil and the receiving coil are wound,
- inserting the return core (77) into the cavity (86) of the housing.

9. Method according to Claim 9, **characterized in that** the housing is formed by means of injection moulding or transfer moulding, wherein the cavity (86) is introduced into the housing by means of a moulding tool.

10. Method according to either of Claims 8 and 9, **characterized by** overmoulding the functional core (76) at least partially with a protective compound (64) to form the housing.

11. Method according to one of Claims 8 to 10, **characterized by** connecting the receiving coil (5) to electrical connections (74) for outputting the output signal.

## Revendications

1. Capteur de déplacement destiné à détecter un déplacement, ledit capteur de déplacement comprenant :
- une bobine d'excitation (4) destinée à exciter un champ électromagnétique alternatif,
- un dispositif de réception destiné à recevoir par induction le champ électromagnétique alternatif et à délivrer un signal de sortie dépendant du champ électromagnétique alternatif reçu, le dispositif de réception comportant un noyau fonctionnel (76) qui est entouré par au moins une bobine de réception (5), et
- un noyau de rétroaction (77),
le noyau de rétroaction (77) étant conçu pour protéger le noyau fonctionnel (76) contre un champ électromagnétique extérieur et le dispositif de réception comportant un boîtier pourvu d'une cavité (86) dans laquelle est disposé le noyau de rétroaction (77), **caractérisé en ce que**
le noyau de rétroaction (77) contient un alliage cristallin ou est constitué de celuici.

2. Capteur de déplacement selon la revendication 1, **caractérisé en ce qu'**au moins un élément de retenue (90) destiné à maintenir le noyau de rétroaction (77) est disposé dans la cavité (86) ou sur un couvercle (88) de la cavité (86), élément de retenue sur lequel le noyau de rétroaction (77) est fixé, notamment collé, à distance d'une ou plusieurs parois de la cavité (86).

3. Capteur de déplacement selon l'une des revendications précédentes, **caractérisé en ce que** le boîtier est formé par une matière moulée par injection (64) qui vient en appui sur le noyau fonctionnel (76) et l'enveloppe.

4. Capteur de déplacement selon la revendication 3, **caractérisé en ce que** la matière moulée par injection (64) comprend un matériau thermodurci.

5. Capteur de déplacement selon l'une des revendications 3 et 4, **caractérisé en ce que** le noyau fonctionnel (76) comprend un alliage amorphe, notamment sensiblement exempt de magnétostriction.

6. Capteur de déplacement selon l'une des revendications précédentes, **caractérisé en ce que** le capteur de déplacement est conçu pour détecter le trajet parcouru par un émetteur (G) sur la base d'un couplage inductif entre la bobine d'excitation (4) et le dispositif de réception, l'émetteur (G) influant sur le couplage inductif en fonction du trajet par saturation magnétique locale du noyau fonctionnel (76).

7. Capteur de déplacement selon l'une des revendications précédentes, **caractérisé par** un circuit sur un support de câblage destiné à recevoir le signal de sortie du dispositif de réception.

8. Procédé de réalisation d'un capteur de déplacement selon l'une des revendications précédentes, ledit procédé comprenant les étapes suivantes :
- fournir le noyau fonctionnel (76) et le noyau de rétroaction (77),
- entourer le noyau fonctionnel (76) avec le boîtier,
- envelopper la partie du boîtier contenant le noyau fonctionnel (76) avec la bobine d'excitation (4) et la bobine de réception (5),
- introduire la cavité (86) dans le boîtier à l'extérieur de la partie du boîtier enveloppée par la bobine d'excitation et la bobine de réception,
- insérer le noyau de rétroaction (77) dans la cavité (86) du boîtier.

9. Procédé selon la revendication 9, **caractérisé en ce que** le boîtier est formé par moulage par injection ou par moulage par transfert, la cavité (86) étant introduite dans le boîtier au moyen d'un moule.

10. Procédé selon l'une des revendications 8 et 9, **caractérisé par** l'enrobage du noyau fonctionnel (76) au moins partiellement avec une matière de protection (64) pour former le boîtier.

11. Procédé selon l'une des revendications 8 à 10, **caractérisé en ce que** la bobine de réception (5) est reliée à des bornes électriques (74) pour délivrer le signal de sortie.
